# EUROPEAN PATENT SPECIFICATION

(11) **EP 0 573 827 B1**
(45) Date of publication and mention of the grant of the patent: **21.07.1999**
(21) Application number: 93108228.3
(22) Date of filing: 21.05.1993
(51) Int. Cl.: G05B 19/08

(54) **Control panel for household appliances**
Schalttafel für Haushaltsgeräte
Panneau de distribution pour les appareils électroménagers

(30) Priority: 11.06.1992 IT PN920045
(43) Date of publication of application: 15.12.1993
(73) Proprietor: ZELTRON S.p.A., I-33030 Campoformido, Udine (IT)
(72) Inventor: Diodato, Claudio, I-33100 Udine (IT); Dal Bello, Giovanni, I-33010 Reana Del Rojale, Udine (IT)
(74) Representative: Busca, Luciano

(56) References cited:
- EP-A- 0 123 099
- EP-A- 0 394 178
- DE-A- 4 202 084

## Description

This invention relates to a universal-type control panel for electronically controlled household appliances.

Control panels for household appliances are known, for instance as disclosed in DE-U-8 232 951, to have their front side so arranged as to be capable of accomodating interchangeable decorating panels. Such a design solution enables the control board of a household appliance to be varied at will in its aesthetic outlook. However, it does not of course enable the same control board to be operationally used in different types of household appliances without first undergoing substantial modifications and adaptations. As a matter of fact, each type of household appliance (eg. washing machine, dishwasher, cooking oven, etc.) is designed to carry out different, peculiar operational duties and requires, among other things, a corresponding functional arrangement of the control devices to be provided on the control board, with particular reference to the push-button unit through which the user is able to select and/or set the various duty cycles or programmes to be carried out by the appliance.

It would on the contrary be desirable, and it is an object of the present invention, to provide a control panel for household appliances that is capable of being equally well used operationally, without first undergoing any substantial modification, in connection with any type of household appliance.

It is a further object of the present invention to provide a control panel of the above specified type, which is simple to manufacture and is capable of being used to give different commands to a household appliance while making use of a limited number of component parts.

These and further aims are reached according to the present invention, in a control panel for household appliances which is made to embody the features according to the characteristics set forth in the appended claims.

The features and the advantages of the present invention, as defined by claim 1, will be more clearly emphasized by the following description, which is given by way of nonlimiting example with reference to the accompanying drawings in which:
- Figure 1 is a block diagram showing schematically a preferred embodiment of the present invention;
- Figure 2 is a schematical view of a component part of the control panel according to the present invention;
- Figure 3 is a schematical, cross-sectional view through the structure of the control panel, according to a preferred embodiment of the present invention;
- Figure 4 is a simplified flow chart illustrating some operational phases of the control panel according to a particular embodiment of the present invention.

The present invention is based on the generally applying consideration that household appliances of different type, such as for instance washing machines, dishwashers, cooking ovens and ranges, whirlpool baths, etc., and provided with electronic control means, substantially comprise a microprocessor that is arranged to control the operation of the various functional component parts of the appliance and that, as anyone skilled in the art is able to appreciate, can be easily pre-set with a number of different operational programmes which can be adapted to the duty peculiarities of the different types of household appliances. In particular, such programmes can be selected and/or modified by means of a push-button control unit that is capable of driving the microprocessor.

In the second place, the present invention is based on the consideration that push-button control units of the so-called "membrane-switch" type, ie. push-button units with touch-button type switches, are largely known, for instance from the disclosure in EP-A-0 443 944, that are formed by thin diaphragms of plastic material which are preferably transparent and between which transparent electrical conductors are provided.

In general, such push-button control units may be either of a digital or an analog type. Analog push-button units deliver output signals that contain information comprising the co-ordinates of the point where pressure is being exerted; digital push-button units comprise a series of buttons, or keys, that may for instance be given a matrix arrangement, and deliver output signals containing information relating to the buttons or keys that are being actuated.

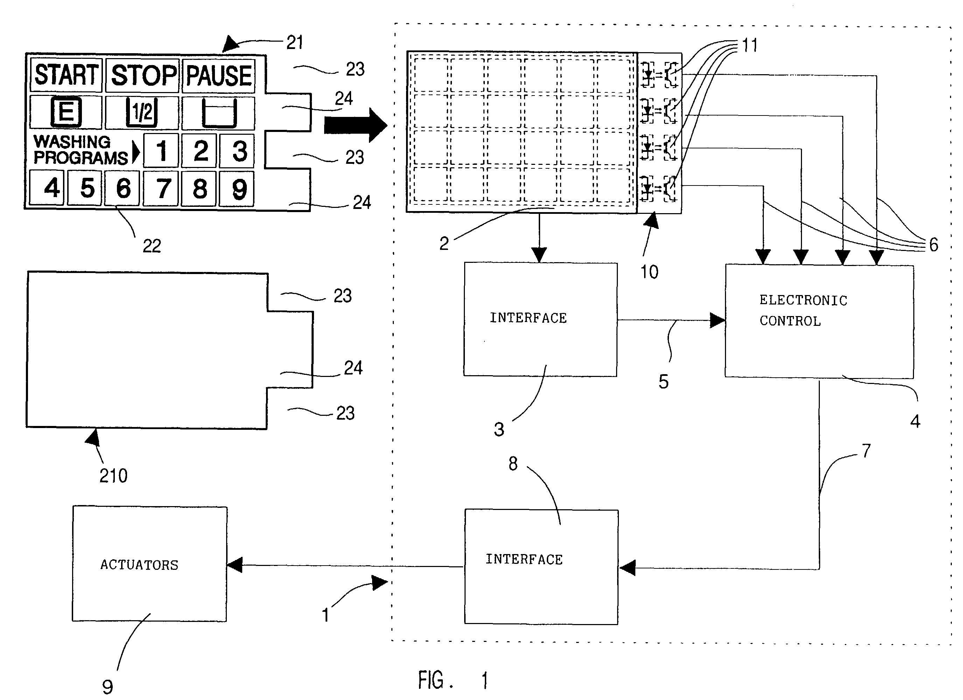

Referring now to Figure 1, it can be noticed that the control panel is indicated generally with the reference numeral 1 and comprises a membrane switch type push-button or keyboard unit 2, which is preferably transparent and is adapted to drive with appropriate command signals, through an interface 3, an electronic control device 4. Said command signals contain, in a coded form, all information relating to the buttons of the push-button unit 2 that are actuated to select the various operational programmes of a household appliance (not shown in Figure 1) and/or to set some process parameters thereof, as it will be described more in detail further on.

The electronic control device 4 may for instance comprise a Motorola 68HC11 microprocessor, with at least a driver input 5, to which the command signals issuing from the push-button control unit 2 are applied, as well as at least an enable input 6 and at least an output 7. The latter (schematically shown as a single output) is adapted to drive the main actuators (represented in a general way with the reference numeral 9) in a household appliance through respective interfaces that are schematically represented with the reference numeral 8.

In a way that anyone skilled in the art may easily understand, said electronic control device 4 is pre-set with a number of different operational programmes, or different groups of operational programmes, that are capable of being selected and possibly adjusted or fine-tuned in accordance with the command signals being sent to the driver input 5. As it will be explained more in detail further on, each group of selectable operational programmes may be correlated to a respective different type of household appliance, such as for instance a washing machine, a dishwasher, a cooking oven or range, a whirlpool bath and the like. In this connection, the electronic control device 4 is further pre-arranged so as to be capable of associating the command signals received at the driver input 5, according to a corresponding coded selection signal received at the input 6, with one of the above mentioned selectable operational programmes or groups of selectable operational programmes. This may for instance mean that in a particular embodiment of the present invention the selection signal at the input 6 of the electronic control device 4 will determine which one of the various groups of pre-set operational programmes is to be associated with the command signals arriving at the input 5. Furthermore, the command signals will determine which operational programme (among the ones in the group of programmes selected) is to be carried out by the appliance under the control of the electronic control device 4. In other words, following conditions arise each time:
a) The selection signal at the input 6 is indicative of the type of household appliance on which the control panel according to the present invention is mounted; accordingly, the actuators 9 will therefore be the main functional elements of said household appliance;
b) The command signals at the input 5 determine the selection and/or the adjustment of a corresponding operational programme pertaining to the type of household appliance represented by the selection signal;
c) In response to said selection and command signals, the electronic control device 4 generates at its output 7 a series of actuation signals to drive the actuators 9 of the household appliance so as to enable the selected operational programme to be carried out correspondingly.

According to a simpler embodiment of the present invention, which will be described further on, the control panel according to the present invention may be used in connection with a single type of household appliance associated with a group of selectable operational programmes (and/or process parameters thereof), so as to enable a single push-button unit 2 to control in a number of different ways the same type of household appliance.

Referring to Figure 1, it can be noticed that the electronic control device 4 is provided with a certain number (four, in the described example) of selection inputs 6, each one of them being connected to a corresponding output of a decoder means 10 associated with the push-button control unit 2.

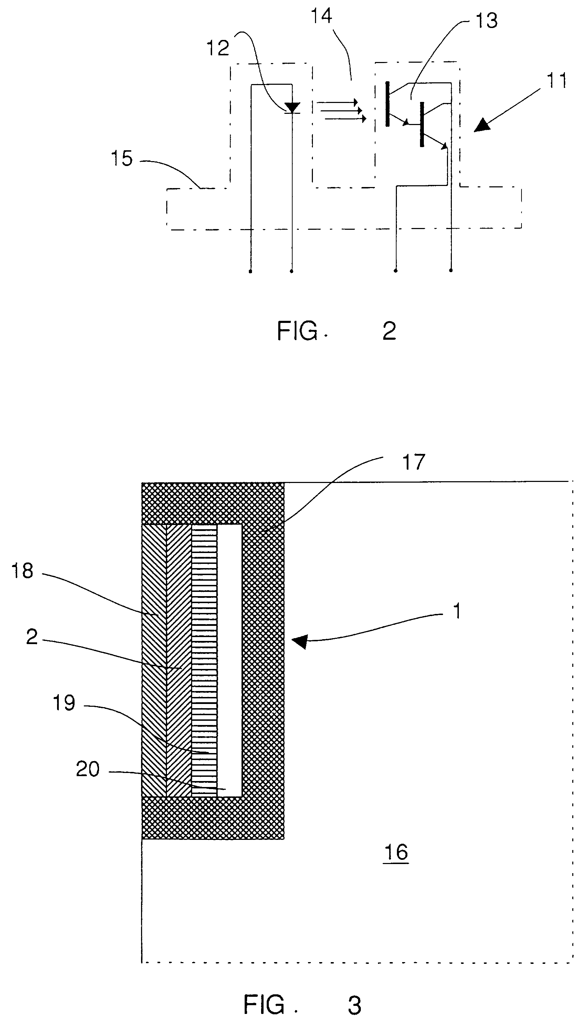

In a preferred way, but not exclusively, said decoder means 10 comprises a plurality of photo-switches 11, each one of them driving a corresponding selection output 6 through a coded signal, such as for instance a binary coded signal. As shown in Figure 2, the photo-switches 11 may for instance be of the TLP800A type marketed by Toshiba, each one of them comprising a LED 12 adapted to transmit infrared rays to a therewith associated phototransistor 13 through a recess 14, or similar provision, provided in a support structure 15.

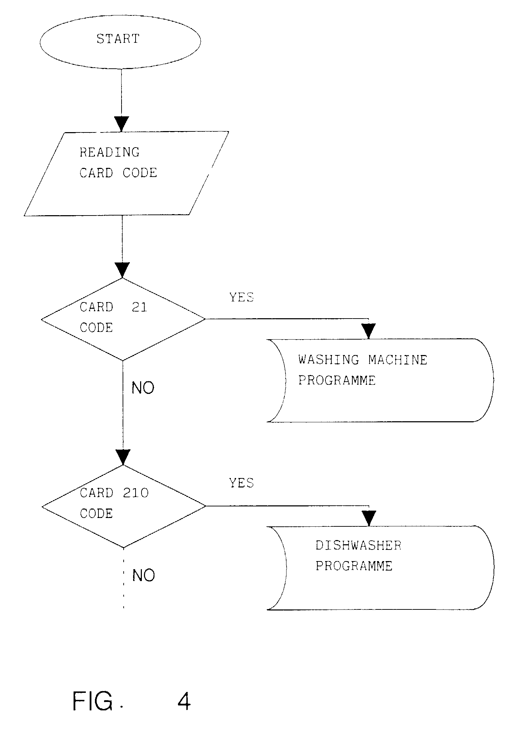

The preferred mechanical structure of the control panel 1 is illustrated in Figure 3, where said control panel, as installed on the upper portion of the front side of a household appliance 16, is shown in its cross-section in correspondence of the push-button control unit 2. For the sake of descriptive simplicity, the electrical connections of the control panel 1 to the functional elements located in the household appliance 16 are not shown in Figure 3.

The control panel 1 comprises a box-like support structure 17 (having a substantially C-shaped cross-sectional profile) in which the push-button unit 2 and the decoder means 10 are located in a substantially side-by-side arrangement as shown in Figure 1. More specifically, said box-like support 17 is enclosed frontally by a flexible, transparent protective film 18, behind which a multi-layer structure extends toward the rear side of the support 17, said multi-layer structure comprising in the given order: the push-button unit 2, which is of the afore described transparent membrane keyboard type; a layer 19 of trasparent plastics performing a stiffening task; and a slit 20 extending in correspondence of the decoder means 10, where it communicates with the recesses 14 of the photo-switches 11. The control panel is further associated with at least a card 21 (Figure 1) which may for instance be made of paper or plastics.

Said card 21 is adapted to be inserted in said slit 20 of the control panel and comprises substantially a main portion 22 and a terminal side portion provided with encoding means 23, 24 adapted to co-operate with the recesses 14 of the photo-switches 11. In the particular embodiment of the present invention being described, said encoding means comprise, for each photo-switch 11, either an area 23 that is transparent to infrared rays (for instance, an aperture made in the card 21) or an opaque area 24 adapted to intercept the infrared rays (for instance, a non-punched area of the card 21). Now, it is fully apparent that, by varying the arrangement of the encoding means 23, 24 along the edge of the card (as it can be seen in Figure 1 when comparing the card 21 with an alternative card 210), also the logic signals generated by the phototransistors 13, ie. the selection signals applied to the inputs 6 of the electronic control device 4, will undergo a corresponding variation, ie. they will change accordingly.

As a consequence, when a card 21 (or 210) is inserted in the slit 20, the inputs 6 of the electronic control device 4 are automatically driven with coded selection signals that enable the same electronic control device to detect a pre-determined operational condition. As it has already been mentioned, such an operational condition may correspond to a defined type of household appliance (such as for instance a washing machine, instead of a dishwasher or a cooking oven); alternatively, the operational programme of a given household appliance can be set in a different way, ie. can be modified in its process parameters, as it will be explained further on.

In any case, anyone skilled in the art will be able to appreciate that the afore cited encoding means 23, 24, as well as the respective decoder means 10, may be of any other different type suitable to this purpose. For instance, they may comprise reflection-type optical devices, or simple electrical contacts connectable to metallized areas or the like.

In correspondence of its main portion 22, the card 21 carries, imprinted on its front surface (visible to the user through the transparent film 18 and the transparent membrane push-button unit 2), graphical markings and indications that are positioned exactly in correspondence of the respective buttons or keys of said push-button unit 2 when the card is inserted in position in the slit 20. Therefore, the user is able to visually recognize the particular purpose or function which each button of the push-button unit 2 is assigned according to the different card 21 or 210 being actually used, ie. according to the operational programme, or group of operational programmes, that the electronic control device 4, selects on the basis of the coded signals it receives at its inputs 6.

In a particular embodiment of the present invention, inserting a card 21 in the slit 20 causes for example the electronic control device 4 to be specially pre-set, in response to the corresponding selection signals received at its inputs 6, for carrying out (in a way that anyone skilled in the art may be able to easily understand on the basis of the teachings of the present invention) operational programmes that are typical of such a household appliance as a washing machine. Such operational programmes may be selected and/or set by pressing or actuating the buttons in the push-button unit 2 in accordance with the indications appearing on the card 21.

In the particular example illustrated in Figure 1, operational programmes numbered from 1 to 9 can be selected; the so-called "saving option" can be included in the selected programme; the water filling levels in the washing tub of the machine can be varied; the various start, stop, pause, end-of-programme, etc. buttons can be actuated to start, stop, etc. the on-going programme. In a *per se* known manner, the output 7 of the electronic control device 4 drives the actuators 9 of the machine with actuation signals corresponding to both the particular type of household appliance being associated to the card 21 and the programme selected through the push-button unit 2.

Alternatively, a card 210 (of which only the contour is shown in Figure 1) may be used, which is provided with encoding means 23, 24 for association to a different household appliance, such as for instance a dishwasher. Accordingly, the decoder means 10 will drive the selection inputs 6 of the electronic control device 4 with coded signals that are effective in letting said electronic control device be pre-set for carrying out such operational programmes as are typical of a dishwasher.

In a similar way as described in connection with the afore considered case, such operational programmes will be capable of being selected and/or set by actuation the buttons in the push-button unit 2 according to the relevant indications appearing on the card 210. It will be appreciated that the indications imprinted on each card 21, 210, etc. may be of a different kind and/or may be given a different arrangement in accordance to the peculiarities of the household appliance to which the card refers.

Figure 4 shows schematically a flow chart illustrating how the electronic control device 4 combines with the decoder means 10 to select the afore cited groups of different operational programmes according to which one of the different cards 21, 210, etc. is used.

Based on the above description, a further basic advantage of the present invention is now fully apparent: the control panel 1, as comprising an electronic control device 4 that is arranged to store various groups of selectable operational programmes, can be manufactured on a mass-production scale, since it can be used "universally" in connection with household appliances of different type. As a matter of fact, all that is required to apply the control panel 1 to a given type of household appliance 16, is inserting in the slit 20 a card 21 (or 210) specially pre-arranged for that type of household appliance. The resulting simplification in manufacturing the panels on an industrial scale, as well as the economic benefits connected therewith, are fully apparent.

Substantially similar performance capabilities can be achieved through the use of a push-button unit 2 of some different type, such as for instance a substantially traditional, non-transparent type. In this case, the graphical indications relating to the function of the buttons of the push-button unit shall not be imprinted on each card 21, 210, etc., but shall on the contrary be provided on the outer front surface of the push-button unit itself. This variant enables more traditional, cheaper component parts to be used, while however limiting the practical use flexibility of the whole control panel. In any case, the control panel 1 can be conveniently be pre-assembled separately from the respective household appliance, with resulting advantages as far as manufacturing and/or servicing are concerned.

In a further embodiment of the present invention, which is actually simpler than the above described one, the control panel 1 is adapted to be solely applied to the same type of household appliance, such as for instance washing machines, which may be manufactured in various different models having different performance capabilities and profiles. With particular reference to Figure 1, it can be noticed how in such a case each card 21, 210, etc. can be associated to a respective model of the same type of household appliance, while the electronic control device 4 can be pre-set to select, in response to the coded signals received at its inputs 6, a respective operational programme stored therein. Based on the characteristics of the encoding means 23, 24 of the card being used, the above mentioned operational programme thus selected will automatically be corresponding to the model of household appliance that is correlated to the same card, while at least some of its process parameters will be able to be changed or adjusted by actuating the buttons in the push-button unit 2 according to the visual indications appearing on the card. In the case of a washing machine, for instance, such process parameters of a selected programme as the temperature of the washing liquor, the level of the rinse water, the spin-extraction speed, etc. can be adjusted correspondingly. In any case, for each different card inserted in the slit 20 of the control panel 1, each button of the push-button unit 2 may be assigned a different function or purpose. The considerable potential in terms of functional flexibility of the control panel according to the present invention is therefore quite apparent.

The afore described control panel may of course be the subject of a number of modifications considered to be appropriate without departing from the scope of the present invention, as limited only by the scope of the appended claims. For instance, anyone skilled in the art will, on the basis of the teachings of this invention, quite easily appreciate that the two afore described embodiments may be combined with each other in such a way that the use of a particular card 21, 210, etc. may enable the user to select, and possibly also adjust, operational programmes that are not only appropriate to a particular type of household appliance, but also to a particular model of such a type of household appliance.

## Claims

1. Control panel for household appliances, comprising electronic control means (4) in which a plurality of operational programmes associated with respective different household appliances are stored, said electronic control means (4) having at least a driver input (5) arranged to be fed with command signals derived from a push-button unit (2), and having further at least an output (7) arranged to drive, with actuation signals, the main operational elements (9) of a given household appliance (16), characterized in that said electronic control means (4) further comprise at least a selection input (6) permitting the inputting to the electronic control unit (4) of selection signals from a decoder means (10) associated with said push-button unit (2), said selection signals, output by said decoder means (10), being dependent upon an interchangeable encoding means (23, 24) which corresponds to a chosen said household appliance and which is interchangeably associated with said push-button unit (2), said electronic control means (4) being adapted to generate, at said output (7), actuation signals corresponding to an operational programme which is selected among said stored programmes, and possibly adjusted, in response to the combination of said selection signals and said command signals.

2. Control panel according to claim 1, wherein the operational programmes stored in the electronic control means (4) are associated to household appliances of different type, characterized in that said interchangeable encoding means (23, 24) are associated to a household appliance (16) of a given type, said selection signals being indicative of said given type of household appliance, and said command signals being indicative of one of the stored operational programmes associated to said given type of household appliance and/or of respective process parameters of the operational programme selected.

3. Control panel according to claim 1, wherein the operational programmes stored in the electronic control means (4) are associated to different models of household appliances of the same type, characterized in that said encoding means (23, 24) are associated to a given model of household appliance (16), said selection signals being indicative of said given model of household appliance, and said command signals being indicative of respective process parameters of the operational programme selected.

4. Control panel according to claim 1, characterized in that said push-button unit (2) and said decoder means (10) are mounted in a substantially side-by-side arrangement on a box-like support structure (17) provided with a slit (20) adapted to accomodate at least an interchangeable card (21; 210) provided with said encoding means (23, 24), in such a position as to enable said encoding means to co-operate with said decoder means (10).

5. Control panel according to claim 4, wherein said push-button unit (2) is of the flexible transparent membrane type, characterized in that said push-button unit (2) is mounted on said support structure (17) in a position lying over said slit (20), said card (21; 210) comprising both a side portion provided with said encoding means (23, 24) and a main portion (22) in correspondence of which graphical indications are provided that, when said card is inserted in the slit (20), are visible through said transparent membrane to indicate the function or purpose of each button in the push-button unit (2).

6. Control panel according to claim 4, characterized in that said encoding means (23, 24) and said decoder means (10) are of an optical type.

7. Control panel according to claim 6, characterized in that said encoding means comprise at least a transparent area (23) and/or at least an opaque area (24) provided on said card (21; 210) and capable of being detected by a respective photo-switch (11) constituting said decoder means (10) and adapted to drive said selection input (6) of the electronic control means (4).

## Patentansprüche

1. Schalttafel für Haushaltgeräte, umfassend eine elektronische Steuereinrichtung (4) in welcher eine Mehrzahl von Funktionsprogrammen, die sich auf bestimmte unterschiedliche Haushaltgeräte beziehen, gespeichert sind, wobei die elektronische Steuereinrichtung (4) mindestens einen Treibereingang (5) aufweist, welcher so gestaltet ist, daß ihm Befehlssignale zugeführt werden können, die von einer Druckknopfeinheit (2) stammen, und weiterhin mindestens einen Ausgang (7) umfaßt, der so gestaltet ist, daß er mit Betätigungssignalen die Hauptfunktionselemente (9) eines bestimmten Haushaltgerätes (16) betreibt, **dadurch gekennzeichnet, daß** die elektronische Steuereinrichtung (4) weiterhin mindestens einen Auswahleingang (6) aufweist, der die Eingabe von Auswahlsignalen von einer Dekodiereinrichtung (10), die mit der Druckknopfeinheit (2) verbunden ist, ermöglicht, wobei die Auswahlsignale, die von der Dekodiereinrichtung (10) ausgegeben werden, von einer austauschbaren Codiereinrichtung (23, 24) abhängig sind, welche mit einem ausgewählten Haushaltgerät übereinstimmt, und welche mit der Druckknopfeinheit (2) austauschbar verbunden ist, und die elektronische Steuereinrichtung (4) so gestaltet ist, daß sie am Ausgang (7) Betätigungssignale erzeugt, die einem Funktionsprogramm entsprechen, welches aus den gespeicherten. Programmen ausgewählt ist, und möglicherweise in Reaktion auf die Kombination der Auswahlsignale mit den Befehlssignalen angepaßt werden kann.

2. Schalttafel nach Anspruch 1, bei welcher die Funktionsprogramme, die in der elektronischen Steuereinrichtung (4) gespeichert sind, sich auf Haushaltgeräte unterschiedlichen Typs beziehen, **dadurch gekennzeichnet, daß** eine austauschbare Codiereinrichtung (23, 24) mit einem Haushaltgerät (16) eines bestimmten Typs verbunden ist, daß die Auswahlsignale indikativ für den vorgegebenen Typ eines Haushaltgerätes sind, und daß die Befehlsignale indikativ für eines der gespeicherten Funktionsprogramme, die mit dem bestimmten Typ eines Haushaltgerätes verbunden sind, und/oder entsprechenden Verfahrensparametern der gewählten Funktionsprogramme sind.

3. Schalttafel nach Anspruch 1, bei welcher die Funktionsprogramme, die in der elektronischen Steuereinrichtung (4) gespeichert sind, sich auf unterschiedliche Modelle von Haushaltgeräten desselben Typs beziehen, **dadurch gekennzeichnet, daß** die Codiereinrichtung (23, 24) sich auf ein bestimmtes Modell eines Haushaltgerätes (16) bezieht, daß die Auswahlsignale indikativ für das bestimmte Modell des Haushaltgerätes sind, und daß die Befehlssignale indikativ für die entsprechenden Verfahrensparameter des gewählten Funktionsprogrammes sind.

4. Schalttafel nach Anspruch 1, **dadurch gekennzeichnet, daß** die Druckknopfeinheit (2) und die Decodiereinrichtung (10) im wesentlichen in einer kastenartigen Haltestruktur (17), welche einen Schlitz (20) aufweist, der so gestaltet ist, daß er mindestens eine austauschbare Karte (21; 210) aufnehmen kann, die mit der Codiereinrichtung (23, 24) in einer solchen Position versehen ist, daß die Codiereinrichtung mit der Decodiereinrichtung (10) zusammenwirken kann, Seite an Seite angeordnet sind.

5. Schalttafel nach Anspruch 4, bei welcher die Druckknopfeinheit (2) eine flexible transparente Membran ist, **dadurch gekennzeichnet, daß** die Druckknopfeinheit (2) an einer Haltestruktur (17) in einer Position, die über dem Schlitz (20) liegt, befestigt ist, und die Karte (21; 210) sowohl einen seitlichen Bereich umfaßt, welcher mit der Codiereinrichtung (23, 24) versehen ist, als auch einen Hauptbereich (22), in welchem graphische Zeichen vorgesehen sind, welche, wenn die Karte in den Schlitz (20) eingefügt ist, durch die transparente Membran sichtbar sind, um die Funktion oder den Zweck jedes Knopfes der Druckknopfeinheit (2) anzuzeigen.

6. Schalttafel nach Anspruch 4, **dadurch gekennzeichnet, daß** die Codiereinrichtung (23, 24) und die Decodiereinrichtung (10) vom optischen Typ sind.

7. Schalttafel nach Anspruch 6, **dadurch gekennzeichnet, daß** die Codiereinrichtung mindestens einen transparenten Bereich (23) und/oder mindestens einen lichtundurchlässigen Bereich (24) aufweist, welcher auf der Karte (21; 210) vorgesehen ist, und durch ein entsprechendes Fotorelais (11) ermittelt werden kann, welches die Decodiereinrichtung (10) darstellt und so gestaltet ist, daß sie den Auswahleingang (6) der elektronischen Steuereinrichtung (4) treibt.

## Revendications

1. Panneau de distribution pour appareils électroménagers, comprenant des moyens de commande électronique **(4)** dans lesquels est enregistrée une pluralité de programmes opérationnels associés à des équipements électroménagers différents respectifs, lesdits moyens de commande électronique **(4)** ayant au moins une entrée de commande **(5)** agencée pour être alimentée avec des signaux de commande provenant d'une unité à boutons-poussoirs **(2)**, et ayant de plus au moins une sortie **(7)** agencée pour entraîner, par des signaux d'actionnement, les principaux éléments opérationnels **(9)** d'un équipement électroménager **(16)** donné, caractérisé en ce que lesdits moyens de commande électronique **(4)** comprennent de plus au moins une entrée de sélection **(6)** permettant d'entrer dans l'unité de commande électronique **(4)** des signaux de sélection provenant de moyens de décodage **(10)** associés à ladite unité à boutons-poussoirs **(2)**, lesdits signaux de sélection délivrés par lesdits moyens de décodage **(10)** dépendant de moyens de codage interchangeables **(23, 24)** qui correspondent à l'un choisi desdits équipements électroménagers et qui sont associés de manière interchangeable à ladite unité à boutons-poussoirs **(2)**, lesdits moyens de commande électronique **(4)** étant adaptés pour générer, au niveau de ladite sortie **(7)**, des signaux d'actionnement correspondant à un programme opérationnel qui est choisi parmi lesdits programmes enregistrés, et éventuellement ajusté, en réponse à la combinaison desdits signaux de sélection et desdits signaux de commande.

2. Panneau de distribution selon la revendication 1, dans lequel les programmes opérationnels enregistrés dans les moyens de commande électronique **(4)** sont associés à des équipements électroménagers de différents types, caractérisé en ce que lesdits moyens de codage interchangeables **(23, 24)** sont associés à un équipement électroménager **(16)** d'un type donné, lesdits signaux de sélection étant indicatifs dudit type donné d'équipement électroménager et lesdits signaux de commande étant indicatifs de l'un des programmes opérationnels enregistrés associés audit type donné d'équipement électroménager et/ou de paramètres de procédé respectifs du programme opérationnel choisi.

3. Panneau de distribution selon la revendication 1, dans lequel les programmes opérationnels stockés dans les moyens de commande électronique **(4)** sont associés à différents modèles d'équipements électroménagers du même type, caractérisé en ce que lesdits moyens de codage **(23, 24)** sont associés à un modèle donné d'équipement électroménager **(16)**, lesdits signaux de sélection étant indicatifs dudit modèle donné d'équipement électroménager et lesdits signaux de commande étant indicatifs de paramètres de procédé respectifs du programme opérationnel choisi.

4. Panneau de distribution selon la revendication 1, caractérisé en ce que ladite unité à boutons-poussoirs **(2)** et lesdits moyens de décodage **(10)** sont montés dans une disposition sensiblement côte à côte sur une structure support de type boîtier **(17)** munie d'une fente **(20)** adaptée pour recevoir au moins une carte interchangeable **(21; 210)** munie desdits moyens de codage **(23, 24)**, dans une position telle que lesdits moyens de codage peuvent coopérer avec lesdits moyens de décodage **(10)**.

5. Panneau de distribution selon la revendication 4, dans lequel ladite unité à boutons-poussoirs **(2)** est du type à membrane flexible transparente, caractérisé en ce que ladite unité à boutons-poussoirs **(2)** est montée sur ladite structure support **(17)** dans une position située sur ladite fente **(20)**, ladite carte **(21; 210)** comprenant à la fois une partie latérale munie desdits moyens de codage **(23, 24)** et d'une partie principale **(22)** en correspondance de laquelle des indications graphiques sont fournies, qui, lorsque ladite carte est insérée dans la fente **(20)**, sont visibles à travers ladite membrane transparente afin d'indiquer la fonction ou le but de chaque bouton de l'unité à boutons-poussoirs **(2)**.

6. Panneau de distribution selon la revendication 4, caractérisé en ce que lesdits moyens de codage **(23, 24)** et lesdits moyens de décodage **(10)** sont d'un type optique.

7. Panneau de distribution selon la revendication 6, caractérisé en ce que lesdits moyens de codage comprennent au moins une zone transparente **(23)** et/ou au moins une zone opaque **(24)** formée sur ladite carte **(21; 210)** et capable d'être détectée par un interrupteur photoélectrique **(11)** respectif constituant lesdits moyens de décodage **(10)** et adapté pour commander ladite entrée de sélection **(6)** de moyens de commande électronique **(4)**.
